(19) Europäisches Patentamt
European Patent Office
Office européen des brevets

(11) **EP 3 100 991 B1**

(12) **EUROPÄISCHE PATENTSCHRIFT**

(45) Veröffentlichungstag und Bekanntmachung des Hinweises auf die Patenterteilung:
**13.09.2017  Patentblatt 2017/37**

(51) Int Cl.:
***C04B 28/18*** (2006.01)     ***C04B 40/00*** (2006.01)

(21) Anmeldenummer: **16181093.2**

(22) Anmeldetag: **20.05.2014**

(54) **VERFAHREN ZUR HERSTELLUNG EINES HYDROTHERMAL GEHÄRTETEN POREN- ODER SCHAUMBETONFORMKÖRPERS**

METHOD OF PREPARING A HYDROTHERMALLY CURED PORE OR FOAM CONCRETE MOULD

PROCEDE DE FABRICATION D'UN CORPS DE FORMAGE DE BETON CELLULAIRE OU POREUX DURCI HYDROTHERMAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.07.2013  DE 102013011742**

(43) Veröffentlichungstag der Anmeldung:
**07.12.2016  Patentblatt 2016/49**

(62) Dokumentnummer(n) der früheren Anmeldung(en) nach Art. 76 EPÜ:
**14169131.1 / 2 824 086**

(73) Patentinhaber: **Xella Baustoffe GmbH**
**47259 Duisburg (DE)**

(72) Erfinder:
• **STUMM, Andreas**
**14476 Potsdam (DE)**

• **BOENKENDORF, Ulf**
**31188 Holle (DE)**

(74) Vertreter: **Patent- und Rechtsanwälte**
**Dr. Solf & Zapf**
**Candidplatz 15**
**81543 München (DE)**

(56) Entgegenhaltungen:
| | |
|---|---|
| EP-A1- 2 371 783 | WO-A1-2006/134080 |
| WO-A1-2009/121635 | CN-A- 101 905 964 |
| DE-A1- 2 744 365 | DE-A1- 10 041 368 |
| DE-A1-102005 005 259 | DE-A1-102005 014 704 |
| DE-A1-102010 005 361 | DE-B4- 10 066 270 |
| JP-A- 2001 058 884 | JP-A- 2001 302 367 |

**Beschreibung**

Die vorliegende Erfindung betrifft ein Verfahren zur Herstellung eines Poren- oder Schaumbetonformkörpers aus hydrothermal gehärtetem Poren- oder Schaumbetonmaterial.

Porenbetonmaterial ist ein hydrothermal gehärtetes, porösiertes Calciumsilikathydratmaterial. Es wird hergestellt aus wässrigen Mischungen aus mindestens einem mineralischen Bindemittel, welches mindestens eine im Hydrothermalprozess reaktionsfähige CaO-Komponente, z.B. Zement oder Branntkalk oder Kalkhydrat, und mindestens eine im Hydrothermalprozess reaktionsfähige $SiO_2$-Komponente, z.B. Quarzmehl oder Flugasche, enthält, einem Treibmittel, insbesondere Aluminiumpulver- und/oder -paste, sowie gegebenenfalls, insbesondere inerten, Zusatzstoffen. Außerdem kann die wässrige Mischung zumindest eine Gesteinskörnung (Zuschlagstoff) und/oder übliche Zusatzmittel sowie eine Calciumsulfat-Komponente enthalten. Die wässrige Mischung wird in Gießformen gegossen, auftreiben und ansteifen gelassen, gegebenenfalls geschnitten und anschließend einer Dampfhärtung unterzogen.

Für die Herstellung von hydrothermal gehärtetem Schaumbetonmaterial wird anstelle des Treibmittels vorgefertigter Schaum untergemischt und der Treibprozess entfällt.

Poren- und Schaumbetonmaterial besteht im Wesentlichen aus einem Feststoffsteggerüst aus Calciumsilikathydratphasen (CSH-Phasen), Restquarzkörnern, gegebenenfalls den inerten Zusatzstoffen und/oder der Gesteinskörnung und weiteren Nebenbestandteilen, wie z.B. Anhydrit. Die Restquarzkörner, die inerten Zusatzstoffe und die Gesteinskörnung sind in die CSH-Phasen eingebettet. Das Feststoffsteggerüst weist Stege auf, die die durch die Porosierung oder die Schaumzugabe künstlich erzeugten Poren (=Makroporen) umgibt. Außerdem weist das Feststoffsteggerüst Mikroporen auf, die in die CSH-Phasen eingebettet sind bzw. in diesen verteilt sind. Die Mikroporen sind Bestandteil des Feststoffsteggerüsts. Die CSH-Phasen des Feststoffsteggerüsts fungieren somit als Bindephase im Feststoffsteggerüst. Sie sind größtenteils kryptokristallin und kristallin, in der Regel handelt es sich um CSH(I) und hauptsächlich um 11 Å-Tobermorit.

Poren- bzw. Schaumbetonformkörper sind Bausteine aus Poren- und Schaumbetonmaterial. Unbewehrte Poren- bzw. Schaumbetonformkörper werden hauptsächlich als Mauersteine eingesetzt. Sie werden in Abhängigkeit von den Fertigungstoleranzen auch als Poren- oder Schaumbetonplansteine- oder -blöcke bezeichnet. Bewehrte Poren- bzw. Schaumbetonformkörper werden hauptsächlich als großformatige Bauteile eingesetzt.

Poren- und Schaumbetonmaterial weist als Baumaterial gute bauphysikalische Eigenschaften auf. Insbesondere weist Poren- und Schaumbetonmaterial hohe Druckfestigkeiten bei relativ geringer Rohdichte und geringer Wärmeleitfähigkeit auf. Aus einem rechnerischen Bezug der Druckfestigkeit zur Trockenrohdichte ergibt sich die sogenannte A-Zahl. Sie repräsentiert die relative Druckfestigkeit des Poren- oder Schaumbetonmaterials. Je größer die A-Zahl ist, desto besser ist das Druckfestigkeitsniveau. Die A-Zahl wird wie folgt berechnet:

$$\text{A-Zahl [ - ] = Druckfestigkeit [N/mm}^2\text{] / ((Trockenrohdichte [kg/dm}^3\text{])}^2 \cdot 0{,}016 \text{ [Ndm}^6\text{/mm}^2\text{kg}^2\text{])}$$

Um die Wärmeleitfähigkeit zu verringern, ist es bekannt, als Zusatzstoff bei der Poren- oder Schaumbetonherstellung Kalksteinmehl zu verwenden. Kalksteinmehl ist chemisch inert und autoklavresistent. Die spezifische Oberfläche des üblicherweise eingesetzten Kalksteinmehls beträgt 4000-6000 cm$^2$/g nach Blaine. Durch die Zugabe von Kalksteinmehl werden zudem die Schwindung und die Sorptionsfeuchte reduziert, weil dieses in das Feststoffsteggerüst eingelagert wird und das Feststoffsteggerüst somit weniger CSH-Phasen enthält. Dies verursacht gleichzeitig auch eine Reduzierung des Druckfestigkeitsniveaus (A-Zahl).

Beispielsweise offenbart die DE 100 41 368 A1 ein Verfahren zur Herstellung von Porenbeton, wobei zur Steuerung der Festigkeiten und/oder E-Moduli und/oder der Rohdichte und/oder der Wärmeleitfähigkeit des erhärteten Porenbetons die Kornverteilung der Sandkomponente derart eingestellt wird, dass zumindest eine feine $SiO_2$-reiche Fraktion vorhanden ist, die bezüglich ihrer Oberfläche und Reaktivität derart beschaffen ist, dass sie mit dem vorhandenen reaktiven Kalk während der Autoklavierung CSH-Phasen, insbesondere Tobermorit bildet und zumindest eine grobe Kornfraktion als Stützgefügebildner zugesetzt wird. Als Stützgefügebildner können dabei z.B. Kalksteinmehl bzw. Calcitmehl oder Sekundärrohstoffmehle wie Flugaschenmehl, Filterstäube, Mehle metallurgischer Schlacken verwendet werden. Zudem weist der Stützgefügebildner vorzugsweise eine Kornverteilung von 30 bis 400 $\mu$m, insbesondere 50 bis 300 $\mu$m, bevorzugt 80 bis 200 $\mu$m auf.

Auch die DE 20 2008 017 703 U1 befasst sich mit der Verringerung der Wärmeleitfähigkeit. Gemäß der DE 20 2008 017 703 U1 wird dies dadurch erreicht, dass das Feststoffsteggerüst bis zu 10 M.-% Restquarzkörner und/oder Gesteinskörner enthält. Dies resultiert insbesondere aus der Verwendung von Quarzmehl mit einer spezifischen Oberfläche nach Blaine von mindestens 6000 cm$^2$/g und einer entsprechenden Autoklavierdauer.

Nach der EP 1 892 226 A2 wird versucht, die Wärmeleitfähigkeit eines Porenbetonbausteins dadurch zu reduzieren, dass während der Herstellung einem oder mehreren Ausgangsmaterialien und/oder Zwischenprodukten Partikel eines mikro- oder nanoporösen Materials zugegeben werden. Genannt werden mikro- bzw. nanoporöse Kieselsäure oder Zeolith-Material. Diese Materialien sollen den Prozess des Autoklavierens schadlos überstehen und in die Matrix des Calcium-Silikat-Materials bzw. im hydrothermal gehärteten Baustein in seiner Grundmatrix eingebunden sein. Aufgrund der Beschaffenheit der Partikel nimmt die hygrische Anfälligkeit des daraus hergestellten Porenbetons zu und Schwindung und Sorptionsfeuchte steigen bei gleichzeitigem Abfall der Druckfestigkeit durch die Reduzierung der festigkeitsgebenden CSH-Phasen.

Die DE 10 2005 014 704 A1 offenbart die Herstellung eines Porenleichtbetons, welcher Kalksteinmehl und Flugasche sowie als Füll- und Zuschlagstoffe unter anderem expandiertes Polystyrol (EPS), Perlit, Sande, Kiese, Schlacken, Kork, Gummi, Vermiculit, Glasgranulat, Recyclingmaterial und Fasern enthalten kann.

Die CN 101 905 964 A offenbart die Herstellung eines hochfesten Porenbetons, wobei Nano-Calciumcarbonat zugegeben wird, welches zuvor unter Verwendung eines Verkohlungsreaktors hergestellt wurde. Es werden 1 Gew.-% Nano-Calciumcarbonat bezogen auf die Trockenmaterialgesamtmasse zugegeben. Dies soll zur Füllung der Spalten und feinen Löcher dienen und dadurch die Druckfestigkeit des Betons steigern. Zudem wirkt das Nano-Calciumcarbonat als Kristallkern und steigert den Kristallisationsgrad von Tobermorit.

Aufgabe der vorliegenden Erfindung ist die Bereitstellung eines Verfahrens zur Herstellung eines Poren- oder Schaumbetonformkörpers aus Poren- oder Schaumbetonmaterial mit geringer Wärmeleitfähigkeit und gleichzeitig guter Festigkeit.

Diese Aufgabe wird durch ein Verfahren gemäß Anspruch 1 gelöst. Vorteilhafte Weiterbildungen der Erfindung sind in den sich anschließenden Unteransprüchen gekennzeichnet.

Im Folgenden wird die Erfindung anhand einer Zeichnung beispielhaft näher erläutert. Es zeigen:

Figur 1: Eine REM-Aufnahme eines PCC's

Figur 2: Die Phasenzusammensetzung von zehn verschiedenen Porenbetonproben mit unterschiedlichem Gehalt an natürlichem Kalksteinmehl bzw. PCC

Figur 3: Röntgendiffraktogramm von zwei Porenbetonproben

Figur 4: Die A-Zahlen der zehn Porenbetonproben aufgetragen über dem $CaCO_3$-Gehalt der Feststoffmischung der Frischbetonmasse

Figur 5: $\lambda_{10tr}$ der zehn Porenbetonproben aufgetragen über dem $CaCO_3$-Gehalt der Feststoffmischung der Frischbetonmasse

Figur 6: RILEM-Schwindung 20/43 der zehn Porenbetonproben aufgetragen über dem $CaCO_3$-Gehalt der Feststoffmischung der Frischbetonmasse

Die Erfindung sieht vor, als Zusatzstoff bei der Herstellung des erfindungsgemäßen Poren- oder Schaumbetonformkörpers gefälltes Calciumcarbonat (PCC) und/oder gefälltes Calciummagnesiumcarbonat zu verwenden.

Bei PCC (precipitated calcium carbonate) handelt es sich um synthetisches bzw. synthetisch hergestelltes Calciumcarbonat ($CaCO_3$). PCC wird auch als gefälltes bzw. ausgefälltes Calciumcarbonat bezeichnet. Im Unterschied dazu handelt es sich bei GCC (ground calcium carbonate) um gemahlenes Calciumcarbonat natürlichen Ursprungs, welches auch als Kalksteinmehl (KSM) bezeichnet wird. Die Herstellung von PCC erfolgt durch Reaktion von Kohlendioxid mit Kalkmilch bzw. einer Kalkhydrat-Suspension. Die Kalkhydrat-Suspension wird entweder durch Löschen von Branntkalk oder durch Dispergieren von Calciumhydroxid in Wasser hergestellt. Beispielsweise wird PCC in einer Biogas-Aufbereitungsanlage hergestellt, beim Abtrennen von $CO_2$ aus Biogas durch Waschen mit einer Kalkhydrat-Suspension. Je nach Prozessführung können fünf unterschiedliche Formen hergestellt werden. Hauptsächlich wird die skalenoedrische (nadelförmige) Kristallform von Calcit gebildet. Die rhomboedrischen Kristalle von Calcit werden vor allem als Beschichtungsmaterial oder Füllstoff für Papier verwendet. Amorphes PCC kann zwar hergestellt werden, hat aber keine technische Relevanz. Des Weiteren kann PCC in den Modifikationen Aragonit und Vaterit (selten) hergestellt werden. Erfindungsgemäß wird vorzugsweise calcitisches und/oder aragonitisches PCC verwendet.

Gefälltes Calciummagnesiumcarbonat ($CaMg(CO_3)_2$) wird hergestellt durch Einleiten von $CO_2$-haltigem Gas in eine Suspension, die gelöschten Dolomit enthält.

Vorteil des gefällten Calciumcarbonats bzw. des gefällten Calciummagnesiumcarbonats ist, dass es wie auch natürliches Kalksteinmehl chemisch inert und autoklavresistent ist. Dadurch bleibt im Gegensatz zu silikatischen Zuschlagstoffen das C/S-Verhältnis konstant und eine Verschiebung der optimalen Phasengleichgewichte, insbesondere 11 Å-Tobermorit / CSH(I), wird vermieden. Außerdem kann gefälltes Calciumcarbonat bzw. gefälltes Calciummagnesiumcarbonat in feineren, engeren und gleichmäßigeren Kornverteilungen hergestellt werden als gemahlenes, natürliches Calciumcarbonat bzw. Calciummagnesiumcarbonat.

Im Rahmen der Erfindung wurde herausgefunden, dass die Verwendung von gefälltem Calciumcarbonat bzw. gefälltem Calciummagnesiumcarbonat anstelle von Kalksteinmehl natürlichen Ursprungs überraschenderweise zu deutlich verbesserten Eigenschaften des Poren- oder Schaumbetonformkörpers führt. Insbesondere ist die Wärmeleitfähigkeit bei Verwendung von gefälltem Calciumcarbonat bzw. gefälltem Calciummagnesiumcarbonat deutlich geringer. Die Wärmeleitfähigkeit nimmt zudem mit steigendem Gehalt an gefälltem Calciumcarbonat bzw. gefälltem Calciummagnesiumcarbonat stärker ab als bei natürlichem Kalksteinmehl. Vorzugsweise liegt die Wärmeleitfähigkeit des erfindungsgemäß hergestellten Poren- oder Schaumbetonformkörpers bei $\lambda_{10tr} \leq 0,085$ [W/mK], bevorzugt $\lambda_{10tr} \leq 0,075$ [W/mK], insbesondere $\lambda_{10tr} \leq 0,071$ [W/mK] gemäß DIN EN 12664.

Auch das Schwindverhalten wird deutlich verbessert. Das Schwinden wird durch die Verwendung von gefälltem Calciumcarbonat bzw. gefälltem Calciummagnesiumcarbonat ebenfalls deutlich geringer und nimmt mit zunehmendem Gehalt an gefälltem Calciumcarbonat bzw. gefälltem Calciummagnesiumcarbonat überraschenderweise ebenfalls stärker ab als bei Verwendung von natürlichem Kalksteinmehl. Insbesondere beträgt die RILEM-Schwindung (bestimmt gemäß "RILEM Recommended Practice", 1993) 20/43 0,25 bis 0,45 [mm/m], bevorzugt 0,25 bis 0,40 [mm/m].

Die A-Zahl nimmt mit zunehmendem Gehalt an gefälltem Calciumcarbonat und/oder Calciummagnesiumcarbonat ab, überraschenderweise ist der Abfall bei gefälltem Calciumcarbonat/Calciummagnesiumcarbonat aber geringer als bei natürlichem, gemahlenem Kalksteinmehl. Das heißt, ein erfindungsgemäß hergestellter Poren- oder Schaumbetonformkörper mit gefälltem Calciumcarbonat und/oder Calciummagnesiumcarbonat hat eine deutlich geringere Wärmeleitfähigkeit und geringere Schwindung als ein Poren- oder Schaumbetonformkörper mit der gleichen Menge an natürlichem Kalksteinmehl. Zudem ist die A-Zahl der mit gefälltem Calciumcarbonat und/oder Calciummagnesiumcarbonat hergestellten Poren- oder Schaumbetonformkörper höher. Vorzugsweise weist ein erfindungsgemäß hergestellter Poren- oder Schaumbetonformkörper dabei eine Trockenrohdichte $\rho_0$ von 75 bis 500 [kg/m$^3$], bevorzugt 90 bis 350 [kg/m$^3$] gemäß DIN EN 772-13 auf. Die A-Zahl beträgt vorzugsweise über 1300 [], insbesondere über 1700 [], besonders bevorzugt über 2000 [].

Um die gewünschten Eigenschaften zu erreichen, weist das Feststoffsteggerüst des erfindungsgemäß hergestellten Poren- oder Schaumbetonformkörpers dabei vorzugsweise 8 bis 28 M.-%, insbesondere 13 bis 18 M.-%, gefälltes Calciumcarbonat oder Calciummagnesiumcarbonat, bezogen auf den Feststoffanteil des Feststoffsteggerüsts, auf. Die gleichen Mengen gelten für die Summe von PCC und gefälltem Calciummagnesiumcarbonat, wenn beide gefällten Carbonate vorhanden sind. Die Phasenzusammensetzung des Feststoffsteggerüsts wird mittels Röntgenbeugungsanalyse und Auswertung mit der Rietveld-Methode ermittelt.

Des Weiteren wurde im Rahmen der Erfindung herausgefunden, dass das gefällte Calciumcarbonat bzw. Calciummagnesiumcarbonat die frischen Poren- oder Schaumbetonmischungen bei hohen Wasser/Feststoff-Werten (w/f-Werten) durch eine Erhöhung der Viskosität stabilisiert. Das Sedimentieren und das Zusammensacken aufgrund des Entweichens von Wasserstoff nach dem Auftreiben werden deutlich verringert. Gleichzeitig erhöht gefälltes Calciumcarbonat bzw. Calciummagnesiumcarbonat den Wasseranspruch der frischen Poren- oder Schaumbetonmischung im Vergleich zu natürlichem Kalksteinmehl. Aufgrund dessen kann bei der Verwendung von gefälltem Calciumcarbonat bzw. Calciummagnesiumcarbonat als Zusatzstoff mit höheren w/f-Werten gearbeitet werden. Dies erhöht den Anteil an Gelporen. Die eingesetzte Aluminiummenge kann bei entsprechend angepasster Wassermenge konstant gehalten werden.

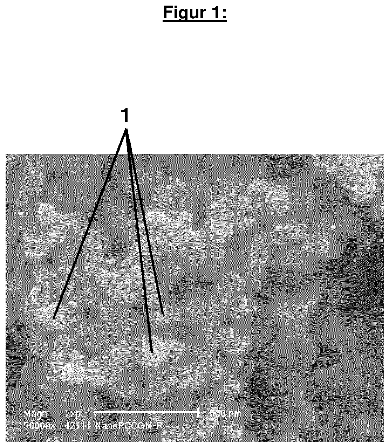

Gefälltes Calciumcarbonat (siehe Fig. 1) bzw. gefälltes Calciummagnesiumcarbonat besteht zudem aus einzelnen Carbonatpartikeln 1. Vorzugsweise handelt es sich bei den Carbonatpartikeln 1 um Nanopartikel mit einer Korngröße $\leq 500$ nm, insbesondere $\leq 200$ nm, besonders bevorzugt $\leq 120$ nm, bestimmt mittels Rasterelektronenmikroskopie. Die Korngrößenverteilung der Carbonatpartikel 1 liegt vorzugsweise bei 2-200 nm, besonders bevorzugt bei 40-120 nm. Je geringer die Korngröße ist, desto besser ist dabei die Stützwirkung der Carbonatpartikel 1 im Feststoffsteggerüst. Vorteilhaft ist dabei, dass gefälltes Calciumcarbonat und gefälltes Calciummagnesiumcarbonat in sehr engen und gleichmäßigen Kornverteilungen sowie hohen Reinheiten und hohem Weißgrad hergestellt werden können. Über die Kornverteilung der Carbonatpartikel 1 können die Eigenschaften des erfindungsgemäßen Poren- oder Schaumbetonmaterials sehr genau eingestellt werden und einfach variiert werden. Im Folgenden werden bevorzugte Reinheitsgrade angegeben:

**Tabelle 1: Bevorzugte Zusammensetzungen von gefälltem Calciumcarbonat**

|  |  | insbesondere |
|---|---|---|
|  | [M.-%] | [M.-%] |
| CaCO$_3$ | $\geq 98$ | $\geq 99$ |
| Fe$_2$O$_3$ | $\leq 0,12$ | $\leq 0,08$ |
| Mn$_2$O$_3$ | $\leq 0,03$ | $\leq 0,01$ |

**Tabelle 2: Bevorzugte Zusammensetzungen von gefälltem Calciummagnesiumcarbonat**

|  |  | bevorzugt |
| --- | --- | --- |
|  | [M.-%] | [M.-%] |
| $CaMg(CO_3)_2$ | ≥ 97 | ≥ 99 |
| $Fe_2O_3$ | ≤ 0,15 | ≤ 0,10 |
| $Mn_2O_3$ | ≤ 0,03 | ≤ 0,01 |

Außerdem spielt die Kornform der Carbonatpartikel 1, insbesondere für die Stabilisierung der frischen Poren- oder Schaumbetonmischungen, eine Rolle. Bevorzugt wird eine kompakte Kornform, insbesondere eine isometrische Kornform der Carbonatpartikel 1. Vorteile der kompakten Kornform ist eine gleichmäßige Ausrichtung der Partikel ohne jegliche Vorzugsrichtung. Die Beurteilung der Kornform kann beispielsweise mittels Rasterelektronenmikroskopie in Zusammenhang mit bekannten granulometrischen Kriterien wie dem Längen/Breiten-Verhältnis erfolgen. Vorzugsweise beträgt das Längen/Breiten-Verhältnis < 3, besonders bevorzugt < 2.

In einem Versuch wurden Porenbetonformkörper nach einem üblichen Herstellungsverfahren mit Kalksteinmehl und gefälltem Calciumcarbonat in unterschiedlichen Gewichtsanteilen hergestellt und die A-Zahl (aus der Druckfestigkeit bestimmt gemäß DIN EN 722-1 und der Trockenrohdichte $\rho_0$ bestimmt gemäß DIN EN 772-13), die Wärmeleitfähigkeit $\lambda_{10tr}$ gemäß DIN EN 12664 und die RILEM-Schwindung bestimmt. Des Weiteren wurde mittels XRD die Phasenzusammensetzung des Feststoffsteggerüsts analysiert. Es wurden insgesamt zehn unterschiedliche Mischungszusammensetzungen mit 0, 5, 10, 20 und 30 M.-% Kalksteinmehl (KSM) bzw. PCC, jeweils bezogen auf den Feststoffgehalt der Frischbetonmassen untersucht:

**Tabelle 3: Zusammensetzungen der Frischbetonmassen**

|  | Einheit | 0% KSM/PCC | 5% KSM/PCC | 10% KSM/PCC | 20% KSM/PCC | 30% KSM/PCC |
| --- | --- | --- | --- | --- | --- | --- |
| **Mischungsgröße** | [m³] | 1 | 1 | 1 | 1 | 1 |
| **Wasser** | [kg/m³] | 360/360 | 360/377 | 360/393 | 360/426 | 360/460 |
| **Sandmehl** | [kg/m³] | 123 | 117 | 111 | 99 | 86 |
| **Zement** | [kg/m³] | 95 | 90 | 85 | 76 | 66 |
| **Weißfeinkalk** | [kg/m³] | 66 | 63 | 60 | 53 | 46 |
| **Anhydrit** | [kg/m³] | 16 | 15 | 14 | 13 | 11 |
| **Kalksteinmehl/PCC** | [kg/m³] | 0 | 15 | 30 | 60 | 90 |
| **Summe Feststoffe** | [kg/m³] | 300 | 300 | 300 | 300 | 300 |
| **Fließmittel** | [kg/m³] | 0,2 | 0,2 | 0,2 | 0,2 | 0,2 |
| **Sedimentationsreduzierer** | [kg/m³] | 3 | 3 | 3 | 3 | 3 |
| **Aluminiumpulver** | [kg/m³] | 0,4 | 0,4 | 0,4 | 0,4 | 0,4 |

Das verwendete Kalksteinmehl (KSM) wies einen Siebrückstand von 2% auf bei 90 μm (Sieb) auf. Bei dem eingesetzten PCC handelte es sich um PCC aus der Biogasreinigung. Es wies nach REM-Untersuchungen eine Korngröße < 100 nm auf.

Aus den Feststoffen wurde jeweils in herkömmlicher Weise mit Wasser eine Frischbetonmasse hergestellt. Diese wurde in an sich bekannter Weise in eine nach oben offene Gießform gegossen und in dieser ansteifen und auftreiben gelassen. Danach wurde der sogenannte grüne Porenbetonkuchen entformt und in einzelne grüne Porenbetonformkörper geschnitten. Die Porenbetonformkörper wurden dann in einem Autoklaven gehärtet und anschließend untersucht:

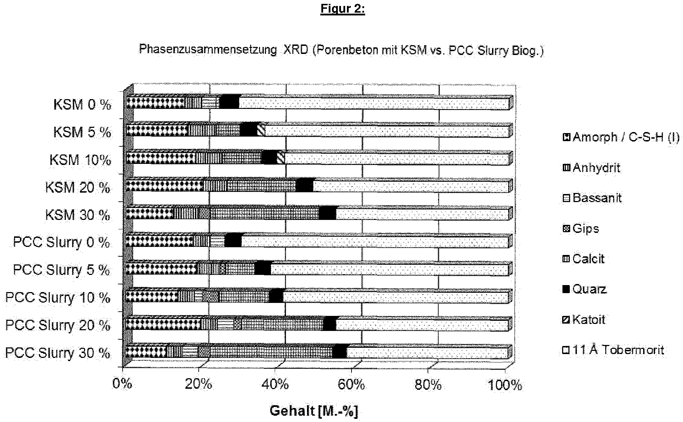

Fig. 2 zeigt die ermittelten Phasenzusammensetzungen des Feststoffsteggerüsts der einzelnen Porenbetonformkörper. Es ist zu erkennen, dass sich die Phasenzusammensetzungen der Porenbetonformkörper mit PCC nicht von denen mit der entsprechenden Menge an Kalksteinmehl (KSM) unterscheiden.

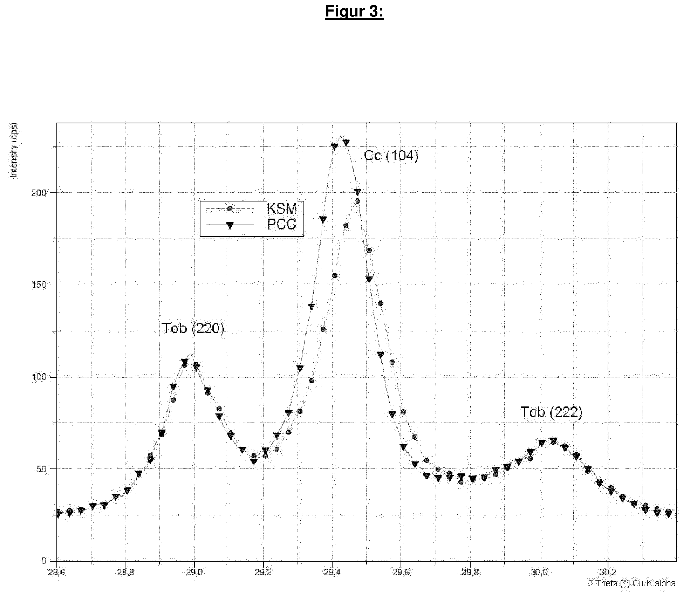

Fig. 3 zeigt Reflexe von Tobermorit (Tob (220) und Tob (222)) sowie Calcit (CC (104)) aus natürlichem Kalksteinmehl (KSM) und PCC. Gemessen wurden jeweils die Proben mit 30 M.-% Kalksteinmehl bzw. PCC. Es ist zu erkennen, dass die Reflexe von Tobermorit bei beiden Proben gleich sind. Die Calcitreflexe unterscheiden sich allerdings signifikant. Der Calcitreflex der Probe mit PCC hat eine deutlich höhere Intensität und geringere Halbwertsbreite. Zudem entspricht seine Lage der von synthetisch gefälltem $CaCO_3$ und liegt somit leicht neben dem d-Wert von Calcit aus der Natur. Der Einsatz von PCC ist also am hergestellten Porenbetonformkörper nachweisbar.

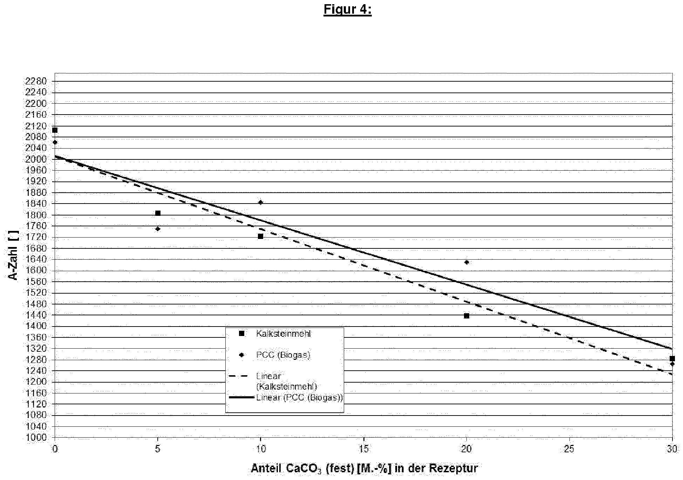

Fig. 4 zeigt die aus den gemessenen Druckfestigkeiten und Trockenrohdichten $\rho_0$ berechneten A-Zahlen in Abhängigkeit vom $CaCO_3$-Gehalt (KSM bzw. PCC) der Feststoffmischungen der Frischbetonmassen. Die A-Zahlen der einander entsprechenden Proben mit Kalksteinmehl und PCC sind im Wesentlichen jeweils gleich. Sowohl bei der Verwendung von Kalksteinmehl als auch bei der Verwendung von PCC nimmt die A-Zahl gleichermaßen mit zunehmendem Gehalt an Zusatzstoff ab.

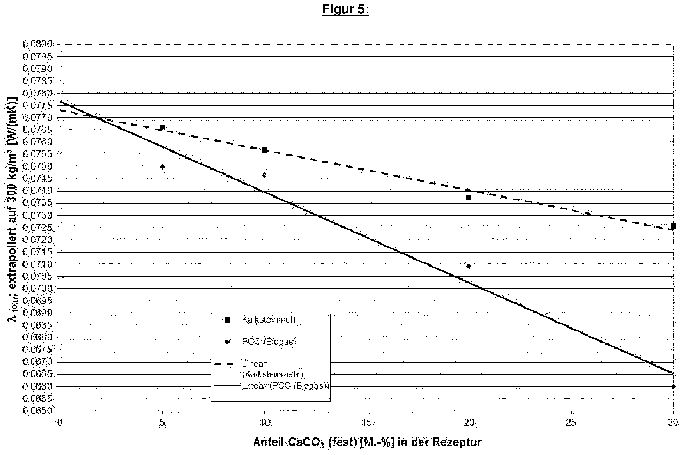

In Fig. 5 sind die gemessenen Wärmeleitfähigkeiten $\lambda_{10tr}$ in Abhängigkeit vom $CaCO_3$-Gehalt (KSM bzw. PCC) der Feststoffmischungen der Frischbetonmassen dargestellt. Es ist eindeutig zu erkennen, dass die Wärmeleitfähigkeiten $\lambda_{10tr}$ der Proben mit PCC signifikant geringer sind als die Wärmeleitfähigkeiten $\lambda_{10tr}$ der Proben mit dem entsprechenden Gehalt an Kalksteinmehl. Des Weiteren nimmt die Wärmeleitfähigkeit $\lambda_{10tr}$ bei den Proben mit PCC mit steigendem $CaCO_3$-Gehalt deutlich stärker ab als bei den Proben mit Kalksteinmehl. Dies ist anhand der linearen Regressionen verdeutlicht.

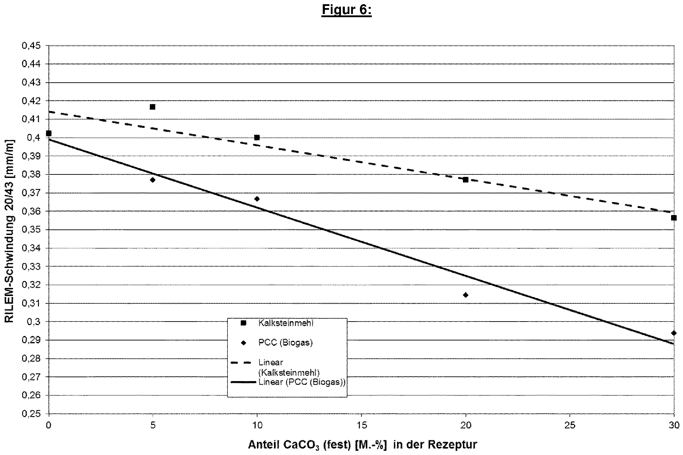

Fig. 6 zeigt die gemessenen RILEM-Schwindungen 20/43 in Abhängigkeit vom $CaCO_3$-Gehalt (KSM bzw. PCC) der Feststoffmischungen der Frischbetonmassen. Hier zeigt sich die gleiche Tendenz wie bei der Wärmeleitfähigkeit. Die Schwindung der Probe mit PCC ist jeweils deutlich geringer als die Schwindung der Probe mit dem entsprechenden Gehalt an Kalksteinmehl. Des Weiteren nimmt die Schwindung bei den Proben mit PCC mit steigendem $CaCO_3$-Gehalt deutlich stärker ab als bei den Proben mit Kalksteinmehl. Dies zeigt wiederum die lineare Regression.

Die Versuche belegen also die Verringerung der Wärmeleitfähigkeit sowie der Schwindung durch den Einsatz von PCC. Die Druckfestigkeit nimmt dabei im Vergleich weniger stark ab als bei der Verwendung von Kalksteinmehl. Die aus dem erfindungsgemäßen Poren- oder Schaumbetonmaterial bestehenden bewehrten oder unbewehrten Poren- oder Schaumbetonformkörper weisen somit hervorragende bautechnische Eigenschaften auf.

Die Herstellung der Poren- oder Schaumbetonformkörper kann dabei auf herkömmliche Art und Weise erfolgen. Es wird lediglich PCC als Zusatzstoff verwendet. Da dieses chemisch inert ist, hat es keinen Einfluss auf die Phasenzusammensetzung der CSH-Phasen. Der Gehalt an gefälltem Calciumcarbonat und/oder Calciummagnesiumcarbonat in der Mischung zur Herstellung des Poren- oder Schaumbetonformkörpers beträgt erfindungsgemäß 10 bis 30 M.-%, insbesondere 15 bis 25 M.-% (bezogen auf die trockene Mischung bzw. den gesamten Feststoffanteil der Frischbetonmasse).

Vorteilhaft ist auch, dass die bei der Herstellung des gefällten Calciumcarbonats bzw. Calciummagnesiumcarbonats entstehende Suspension direkt eingesetzt werden kann. Ein aufwendiges Trocken ist nicht erforderlich.

Wie bereits erläutert, ist es zudem möglich, mit dem PCC und/oder dem gefällten Calciummagnesiumcarbonat hohe Wasser/Feststoff-Werte einzustellen, da das PCC und/oder gefällte Calciummagnesiumcarbonat den Guss stabilisiert. Insbesondere weisen die Frischbetonmassen für die Herstellung des erfindungsgemäßen Poren- oder Schaumbetonmaterials einen Wasser/Feststoff-Wert von 0,5 bis 2,2, bevorzugt 1,0 bis 2,1 auf. Dadurch wird der Gelporenanteil erhöht.

Des Weiteren können im Rahmen der Erfindung selbstverständlich weitere bekannte Zusatzstoffe, wie z.B. Porenbetonmehl und/oder Kalksteinmehl, und/oder übliche Zusatzmittel, wie z.B. Fließmittel und/oder Beschleuniger, und/oder Gesteinskörnungen und/oder Fasern zugegeben werden. Bevorzugt wird die Zugabe von Porenbetonmehl, das aus erfindungsgemäß hergestelltem Poren- oder Schaumbetonmaterial hergestellt wurde.

Im Rahmen der Erfindung liegt es zudem auch, dass zur Stabilisierung der Suspensionen mit dem gefällten Carbonat Dispergiermittel (z.B. Polyphosphate) zugegeben werden.

**Patentansprüche**

1. Verfahren zur Herstellung eines hydrothermal gehärteten Poren- oder Schaumbetonformkörpers aus hydrothermal gehärtetem Poren- oder Schaumbetonmaterial aufweisend ein Feststoffsteggerüst, welches aus einem Schaum resultierende oder durch einen Treibprozess erzeugte Poren umgibt, wobei das Feststoffsteggerüst Calciumsilikathydratphasen, Mikroporen und zumindest einen inerten Zusatzstoff aufweist, und wobei das Feststoffsteggerüst als inerten Zusatzstoff gefälltes Calciumcarbonat und/oder gefälltes Calciummagnesiumcarbonat aufweist,

**gekennzeichnet durch**
folgende Verfahrensschritte

a) Herstellen einer gießfähigen Frischbetonmasse enthaltend mindestens eine hydrothermal reagierende CaO-Komponente, mindestens eine hydrothermal reagierende $SiO_2$-Komponente, als Zusatzstoff gefälltes Calciumcarbonat und/oder gefälltes Calciummagnesiumcarbonat, mindestens ein Treibmittel oder vorgefertigten Schaum, vorzugsweise eine Calciumsulfat-Komponente, und Wasser,

b) Gießen der Frischbetonmasse in eine Gießform, in die gegebenenfalls eine Bewehrung eingehängt ist,

c) Gegebenenfalls Einhängen der Bewehrung in die Gießform,

d) Gegebenenfalls Auftreiben lassen der Frischbetonmasse,

e) Ansteifen lassen der Frischbetonmasse zu einem Poren- oder Schaumbetonkuchen,

f) Schneiden des Poren- oder Schaumbetonkuchens in einzelne Poren- oder Schaumbetonformkörper,

g) Härten der Poren- oder Schaumbetonformkörper im Autoklaven,

**dadurch gekennzeichnet, dass**

eine Frischbetonmasse hergestellt wird, die einen Gehalt an gefälltem Calciumcarbonat und/oder gefälltem Calciummagnesiumcarbonat als Zusatzstoff von 10 bis 30 M.-%, bevorzugt von 15 bis 25 M.-%, bezogen auf den Feststoffanteil in der Frischbetonmasse, aufweist.

**2.** Verfahren nach Anspruch 1,
**dadurch gekennzeichnet, dass**
eine Frischbetonmasse mit einem Wasser/Feststoff-Wert von 0,5 bis 2,2, bevorzugt 1,0 bis 2,1 hergestellt wird.

**3.** Verfahren nach Anspruch 1 oder 2,
**dadurch gekennzeichnet, dass**
gefälltes Calciumcarbonat und/oder gefälltes Calciummagnesiumcarbonat aus der Biogasreinigung verwendet wird.

**4.** Verfahren nach einem der vorhergehenden Ansprüche,
**dadurch gekennzeichnet, dass**
ein Poren- oder Schaumbetonformkörper hergestellt wird, bei dem der Gesamtanteil an Carbonat in Form von gefälltem Calciumcarbonat und/oder gefälltem Calciummagnesiumcarbonat im Feststoffsteggerüst 8 bis 28 M.-%, insbesondere 13 bis 18 M.-% beträgt, bezogen auf den Feststoffanteil des Feststoffsteggerüsts.

**5.** Verfahren nach einem der vorhergehenden Ansprüche,
**dadurch gekennzeichnet, dass**
ein Poren- oder Schaumbetonformkörper hergestellt wird, der eine Wärmeleitfähigkeit $\lambda_{10tr} \leq 0,085$ [W/mK], bevorzugt $\lambda_{10tr} \leq 0,075$ [W/mK], insbesondere $\lambda_{10tr} \leq 0,071$ [W/mK] gemäß DIN EN 12664 aufweist.

**6.** Verfahren nach einem der vorhergehenden Ansprüche,
**dadurch gekennzeichnet, dass**
gefälltes Calciumcarbonat mit einer calcitischen und/oder aragonitischen Modifikation verwendet wird.

**7.** Verfahren nach einem der vorhergehenden Ansprüche,
**dadurch gekennzeichnet, dass**
ein Poren- oder Schaumbetonformkörper hergestellt wird, der eine RILEM-Schwindung 20/43 von 0,25 bis 0,45 [mm/m], bevorzugt 0,25 bis 0,40 [mm/m] aufweist.

**8.** Verfahren nach einem der vorhergehenden Ansprüche,
**dadurch gekennzeichnet, dass**
ein Poren- oder Schaumbetonformkörper hergestellt wird, der eine Trockenrohdichte $\rho_0$ von 75 bis 500 [kg/m$^3$], bevorzugt 90 bis 350 [kg/m$^3$] gemäß DIN EN 772-13 aufweist.

**9.** Verfahren nach einem der vorhergehenden Ansprüche,
**dadurch gekennzeichnet, dass**
ein Poren- oder Schaumbetonformkörper hergestellt wird, der eine A-Zahl von über 1300 [], vorzugsweise von über 1700 [], besonders bevorzugt von über 2000 [] aufweist.

**10.** Verfahren nach einem der vorhergehenden Ansprüche,
**dadurch gekennzeichnet, dass**
gefälltes Calciumcarbonat und/oder gefälltes Calciummagnesiumcarbonat verwendet wird, das aus einzelnen Carbonatpartikeln (1) besteht, die vorzugsweise eine Korngröße $\leq 500$ nm, vorzugsweise $\leq 200$ nm, besonders bevorzugt $\leq 120$ nm, bestimmt mittels Rasterelektronenmikroskopie, aufweisen.

**11.** Verfahren nach Anspruch 10,
**dadurch gekennzeichnet, dass**
Carbonatpartikel (1) mit einer Korngrößenverteilung von 2-200 nm, bevorzugt 40-120 nm verwendet werden.

**12.** Verfahren nach einem der vorhergehenden Ansprüche,
**dadurch gekennzeichnet, dass**
ein unbewehrter Poren- oder Schaumbetonformkörper oder ein eine Bewehrung aufweisender Poren- oder Schaumbetonformkörper hergestellt wird.

**Claims**

**1.** A process for producing a hydrothermally cured porous or foamed concrete moulded body of a hydrothermally cured aerated or foamed concrete material having a solid web frame which surrounds pores resulting from a foam or generated by an expanding process, wherein the solid web frame has calcium silicate hydrate phases, micropores and at least one inert additive, and wherein the solid web frame has precipitated calcium carbonate and/or precipitated calcium magnesium carbonate as an inert additive,
**characterised by**
the following process steps

a) producing a pourable fresh concrete mass containing at least one hydrothermally reacting CaO component, at least one hydrothermally reacting $SiO_2$ component, precipitated calcium carbonate and/or precipitated calcium magnesium carbonate as an additive, at least one expanding agent or prefabricated foam, preferably a calcium sulphate component, and water,
b) pouring the fresh concrete mass into a mould in which a reinforcement is optionally suspended,
c) optionally suspending the reinforcement in the mould,
d) optionally allowing the fresh concrete mass to swell,
e) allowing the fresh concrete mass to set into a porous or foamed concrete cake,
f) cutting the porous or foamed concrete cake into individual porous or foamed concrete moulded bodies,
g) curing the porous or foamed concrete moulded bodies in an autoclave,

**characterised in that**
a fresh concrete mass is produced, which has a content of precipitated calcium carbonate and/or precipitated calcium magnesium carbonate as an additive of 10 to 30% by mass, preferably 15 to 25% by mass, in relation to the solid fraction in the fresh concrete mass.

**2.** A process according to Claim 1,
**characterised in that**
a fresh concrete mass with a water/solid value of 0.5 to 2.2, preferably 1.0 to 2.1, is produced.

**3.** A process according to Claim 1 or 2,
**characterised in that**
precipitated calcium carbonate and/or precipitated calcium magnesium carbonate from biogas purification is used.

**4.** A process according to one of the preceding claims,
**characterised in that**
a porous or foamed concrete moulded body is produced, in which the total content of carbonate in the form of precipitated calcium carbonate and/or precipitated calcium magnesium carbonate in the solid web frame is 8 to 28% by mass, in particular 13 to 18% by mass, in relation to the solid fraction of the solid web frame.

**5.** A process according to one of the preceding claims,
**characterised in that**
a porous or foamed concrete moulded body is produced, which has a thermal conductivity $\lambda_{10tr} \leq 0.085$ [W/mK], preferably $\lambda_{10tr} \leq 0.075$ [W/mK], in particular $\lambda_{10tr} \leq 0.071$ [W/mK] according to DIN EN 12664.

**6.** A process according to one of the preceding claims,
**characterised in that**
precipitated calcium carbonate with a calcitic and/or aragonitic modification is used.

7.  A process according to one of the preceding claims,
    **characterised in that**
    a porous or foamed concrete moulded body is produced, which has a RILEM shrinkage 20/43 of 0.25 to 0.45 [mm/m],
    preferably 0.25 to 0.40 [mm/m].

8.  A process according to one of the preceding claims,
    **characterised in that**
    a porous or foamed concrete moulded body is produced, which has a dry bulk density $\rho_0$ of 75 to 500 [kg/m$^3$],
    preferably 90 to 350 [kg/m$^3$] according to DIN EN 772-13.

9.  A process according to one of the preceding claims,
    **characterised in that**
    a porous or foamed concrete moulded body is produced, which has an a-value of greater than 1300 [], preferably
    greater than 1700 [], particularly preferably greater than 2000 [].

10. A process according to one of the preceding claims,
    **characterised in that**
    precipitated calcium carbonate and/or precipitated calcium magnesium carbonate is used, which is composed of
    individual carbonate particles (1) which preferably have a grain size ≤ 500 nm, preferably ≤ 200 nm, particularly
    preferably ≤ 120 nm, determined by scanning electron microscopy.

11. A process according to Claim 10,
    **characterised in that**
    carbonate particles (1) with a grain-size distribution of 2-200 nm, preferably 40-120 nm, are used.

12. A process according to one of the preceding claims,
    **characterised in that**
    an unreinforced porous or foamed concrete moulded body or a porous or foamed concrete moulded body having
    reinforcement is produced.


**Revendications**

1.  Procédé de production d'un corps moulé en béton cellulaire ou en béton mousse durci hydrothermiquement à partir
    d'un matériau en béton cellulaire ou en béton mousse durci thermiquement présentant une structure en barre en
    matière solide, qui entoure des pores résultant d'une mousse ou produits par un processus de gonflement, dans
    lequel la structure en barre en matière solide présente des phases de silicate de calcium hydraté, des micropores
    et au moins un additif inerte et dans lequel la structure en barre en matière solide présente en tant qu'additif inerte
    du carbonate de calcium précipité et/ou du carbonate de magnésium et de calcium précipité,
    **caractérisé par**
    les étapes de procédé qui suivent consistant à

    a) produire une masse de béton frais, qui peut être coulée, contenant au moins un composant CaO à réaction
    hydrothermique, au moins un composant SiO2 à réaction hydrothermique, du carbonate de calcium précipité
    et/ou du carbonate de magnésium et de calcium précipité en tant qu'additif, au moins un porogène ou une
    mousse préfabriquée, de préférence un composant de sulfate de calcium, et de l'eau,
    b) couler la masse de béton frais dans un moule de coulée, dans lequel est suspendue éventuellement une
    armature,
    c) éventuellement suspendre l'armature dans le moule de coulée,
    d) éventuellement laisser gonfler la masse de béton frais,
    e) laisser se rigidifier la masse de béton frais en un gâteau de béton cellulaire ou de béton mousse,
    f) découper le gâteau de béton cellulaire ou de béton mousse en divers corps moulés en béton cellulaire ou en
    béton mousse,
    g) durcir les corps moulés en béton cellulaire ou en béton mousse dans l'autoclave,

    **caractérisé en ce que**
    une masse de béton frais est produite, qui présente une teneur en carbonate de calcium précipité et/ou en carbonate
    de magnésium et de calcium précipité en tant qu'additif allant de 10 à 30 % en masse, de manière préférée allant de 15 à 25 % en masse, par rapport à la proportion en matière solide dans la masse de béton frais.

2. Procédé selon la revendication 1,
**caractérisé en ce que**
une masse de béton frais est produite avec une valeur eau/matière solide allant de 0,5 à 2,2, de manière préférée allant de 1,0 à 2,1.

3. Procédé selon la revendication 1 ou 2,
**caractérisé en ce que**
du carbonate de calcium précipité et/ou du carbonate de magnésium et de calcium précipité issus de l'épuration de biogaz sont utilisés.

4. Procédé selon l'une quelconque des revendications précédentes,
**caractérisé en ce que**
un corps moulé en béton cellulaire ou en béton mousse est produit, dans le cadre duquel la teneur totale en carbonate présent sous la forme de carbonate de calcium précipité et/ou de carbonate de magnésium et de calcium précipité dans la structure en barre en matière solide s'élève de 8 à 28 % en masse, en particulier de 13 à 18 % en masse, par rapport à la proportion en matière solide de la structure en barre en matière solide.

5. Procédé selon l'une quelconque des revendications précédentes,
**caractérisé en ce que**
un corps en béton cellulaire ou en béton mousse est produit, qui présente une conductivité thermique $\lambda_{10tr} \leq 0,085$ [W/mK], de manière préférée $\lambda_{10tr} \leq 0,075$ [W/mK], en particulier $\lambda_{10tr} \leq 0,071$ [W/mK] selon la norme DIN EN 12664.

6. Procédé selon l'une quelconque des revendications précédentes,
**caractérisé en ce que**
du carbonate de calcium précipité avec une modification calcitique et/ou aragonitique est utilisé.

7. Procédé selon l'une quelconque des revendications précédentes,
**caractérisé en ce que**
un corps moulé en béton cellulaire ou en béton mousse est produit, qui présente une contraction selon RILEM 20/43 allant de 0,25 à 0,45 [mm/m], de manière préférée allant de 0,25 à 0,40 [mm/m].

8. Procédé selon l'une quelconque des revendications précédentes,
**caractérisé en ce que**
un corps moulé en béton cellulaire ou en béton mousse est produit, qui présente une densité apparente po allant de 75 à 500 [kg/m$^3$], de manière préférée allant de 90 à 350 [kg/m$^3$] selon la norme DIN EN 772-13.

9. Procédé selon l'une quelconque des revendications précédentes,
**caractérisé en ce que**
un corps moulé en béton cellulaire ou en béton mousse est produit, qui présente un indice A supérieur à 1 300 [], de préférence supérieur à 1 700 [], de manière particulièrement préférée supérieur à 2 000 [].

10. Procédé selon l'une quelconque des revendications précédentes,
**caractérisé en ce que**
du carbonate de calcium précipité et/ou du carbonate de magnésium et de calcium précipité, lesquels sont constitués de diverses particules de carbonate (1) sont utilisés, qui présentent de préférence une granulométrie $\leq 500$ nm, de préférence $\leq 200$ nm, de manière particulièrement préférée $\leq 120$ nm, définie au moyen d'une microscopie à balayage électronique.

11. Procédé selon la revendication 10,
**caractérisé en ce que**
des particules de carbonate (1) avec une répartition granulométrique de 2 - 200 nm, de manière préférée de 40 - 120 nm sont utilisées.

12. Procédé selon l'une quelconque des revendications précédentes,
**caractérisé en ce que**
un corps moulé en béton cellulaire ou en béton mousse sans armature ou un corps moulé en béton cellulaire ou en béton mousse présentant une armature est produit.

**Figur 1:**

**Figur 2:**

Phasenzusammensetzung XRD (Porenbeton mit KSM vs. PCC Slurry Biog.)

Legend:
- ⊞ Amorph / C-S-H (I)
- ▥ Anhydrit
- ⊟ Bassanit
- ▨ Gips
- ⊞ Calcit
- ■ Quarz
- ▨ Katoit
- ☐ 11 Å Tobermorit

Gehalt [M.-%]

**Figur 3:**

**Figur 4:**

Figur 5:

Figur 6:

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10041368 A1
- DE 202008017703 U1
- EP 1892226 A2
- DE 102005014704 A1
- CN 101905964 A